# EUROPÄISCHE PATENTSCHRIFT

(11) **EP 0 948 381 B1**
(45) Veröffentlichungstag und Bekanntmachung des Hinweises auf die Patenterteilung: **04.12.2002**
(21) Anmeldenummer: 97951898.2
(22) Anmeldetag: 13.11.1997
(51) Int. Cl.: B01D 1/00

(54) **APPARAT UND VERFAHREN ZUM VERDAMPFEN VON FLÜSSIGKEITEN**
PROCESS AND APPARATUS FOR THE EVAPORATION OF A LIQUID
PROCEDE ET APPAREIL POUR L'EVAPORATION D'UN LIQUIDE

(30) Priorität: 16.11.1996 DE 19647378
(43) Veröffentlichungstag der Anmeldung: 13.10.1999
(73) Patentinhaber: Litinas, Georg, Dipl.-Ing., 76139 Karlsruhe (DE)
(72) Erfinder: Litinas, Georg, Dipl.-Ing., 76139 Karlsruhe (DE)
(86) Internationale Anmeldenummer: EP9706340
(87) Internationale Veröffentlichungsnummer: WO98022193

(56) Entgegenhaltungen:
- EP-A- 0 347 244
- DE-A- 3 147 460

## Beschreibung

Die Erfindung betrifft ein Verfahren und einen Apparat zum Verdampfen von Flüssigkeiten. Dieser Apparat und dieses Verfahren wurden in Verbindung mit der Problematik der Süßwassergewinnung aus brackigem oder reinem Salzwasser entwickelt und werden deshalb anhand der dort stattfindenden Prozesse im folgenden erläutert, ohne daß dadurch ihre Anwendbarkeit allein auf dieses Gebiet eingeschränkt sein soll.

Bei der Süßwassergewinnung nach den Destillationsprinzip wird Salzwasser verdampft und anschließend durch Kühlung kondensiert.

Die mit der Verdampfung zusammenhängenden Vorgänge sollen zum besseren Verständnis kurz erläutert werden.
Jede Flüssigkeit verdampft an ihrer Oberfläche mit unterschiedlicher Geschwindigkeit in Abhängigkeit ihrer Temperatur und dem an ihrer Oberfläche herrschenden Partialdruck. Durch Wärmezufuhr wird ein für jede Flüssigkeit spezifischer Punkt - der Siedepunkt - erreicht, bei dem dann die Verdampfung aus der ganzen Masse der Flüssigkeit erfolgt. Dieser Vorgang wird als Sieden oder Kochen bezeichnet.

Es kann sich jedoch als zweckmäßig erweisen, diesen Prozeß auch unterhalb des Siedepunktes der Flüssigkeit ablaufen zu lassen, sei es weil die Leistung der Wärmequelle nicht ausreicht, z. B. bei Betrieb einer solchen Anlage mit Sonnenkollektoren in Abhängigkeit von den Wetterverhältnissen, oder weil man dadurch einen besseren Reinheitsgrad des Destillates erwartet, und Inhaltsstoffe, wie Vitamine oder Aromaöle, durch Überhitzung nicht zerstören möchte.

Ein weiterer gewichtiger Grund zum Arbeiten unterhalb des Siedepunktes ist der geringere Energiebedarf: Aufheiz- und Kühlleistung sind einander proportional, so daß jede Minderung der Wärmeleistung eine mindestens gleich große Einsparung an Kühlleistung mit sich bringt.

Wenn man, wie im vorliegenden Fall, den eigentlichen Verdampfungsprozeß durch Arbeiten unterhalb des Siedepunktes beschleunigen möchte, bieten sich die folgenden bekannten Möglichkeiten an:
- Reduzieren des Druckes an der Oberfläche dieser Flüssigkeit und/oder
- Abtragen der sich an der Oberfläche bildenden Dampfschichten, welche im übertragenen Sinne eine Isolierschicht bilden.

Das sehr verbreitete sogenannte Flash Evaporations-Verfahren kombiniert diese Möglichkeiten und gehört mit mehreren Varianten zum Stand der Technik.

Bekannt ist ferner die Destillatgewinnung durch Komprimieren anstatt durch Kühlen der entstehenden Dämpfe, die als Dampfverdichtung bezeichnet wird.

Bei der Vakuumdestillation ist es bekannt, die Destillationstemperatur gegenüber der Siedetemperatur dadurch abzusenken, daß ein Gas in die zu verdampfende Flüssigkeit eingeleitet wird, das als Träger der Dämpfe vom Verdampfer zum Kondensator dient. (DE-A-3147460)

Der Erfindung liegt die Aufgabe zugrunde, den Wirkungsgrad von Verdampfungsprozessen zu verbessern. Diese Aufgabe wird durch einen Apparat gemäß Anspruch 1 und ein Verfahren gemäß Anspruch 2 gelöst.

Mit der Erfindung gelingt es, nicht nur die Vorteile aller oben erwähnten Methoden zu vereinen, sondern auch unter Simulation eines niedrigeren Siedepunktes
- den notwendigen Energiebedarf durch Nutzen des Wärmepumpenprinzips zu minimieren und dadurch den Wirkungsgrad des Verfahrens zu verbessern und
- die Anlage durch Senken der mittleren Betriebstemperatur in den Stand zu versetzen, jegliche Wärmespende zur Steigerung ihrer Effektivität zu nutzen.
Die Senkung der mittleren Betriebstemperatur der Anlage impliziert weitere Vorteile, zum Beispiel bezüglich einer breiteren Materialauswahl, weil sich nunmehr auch die Korrosionsprobleme entsprechend verringern.

Die Erfindung ist im folgenden anhand schematischer Zeichnungen an zwei Ausführungsbeispielen mit weiteren Einzelheiten näher erläutert. Es zeigen:
Bild 1 einen Vertikalschnitt durch einen Apparat gemäß der Erfindung,
Bild 2 einen Vertikalschnitt durch einen abgewandelten Apparat gemäß der Erfindung.

In den Zeichnungen bedeuten: 1-Expansionsraum oder vierter Raum, 2-Tropfenabscheider, 3-Kompressor, 4-Kompressions- / Kondensationsraum oder dritter Raum, 5-Salzwasser enthaltender Raum oder erster Raum, 6-Süßwasser enthaltender Raum oder zweiter Raum, 7-Konzentrationsmesser, 8-Wärmetauscher, 9-Schwimmerventil, 10-Poröser Boden, 11-Wärmetauscher, 12-Salzwasser enthaltende Räume, 13-Tropfenabscheider / Verteiler, 14-Wärmetauscher / Zusatzquellen.

Ein Verdichter 3 preßt Luft in den dritten Raum 4, den Kompressions- und Kondensationsraum. Dort wird die Luft mit Hilfe des porösen Bodens, - dieser kann aus Glas, Keramik oder Edelstahl sein -, im ersten, Salzwasser enthaltenden Raum 5 in Bläschen verwandelt, um den Sättigungsprozeß beim Aufsteigen im Raum 5 zu beschleunigen. Die nun gesättigte Luft wird im Expansionsraum 1 gesammelt und im dritten Raum 4 verdichtet. Dabei wird die Strömung gedrosselt und durch das umliegende Salzwasser abgekühlt. Dadurch wirft sie einen Teil ihrer Feuchte als Destillat ab, welches über das Schwimmerventil 9 im Raum 6, dem äußeren Behälter, gesammelt wird. Es kann dort bei Bedarf als Wärmespender oder auch als "Warmhalter" eingesetzt werden. Der an der Oberfläche des Destillates herrschende Unterdruck beschleunigt die Entgasung des Destillates. Wenn durch die fortschreitende Ausscheidung des Destillates die Konzentration der Lake einen vorbestimmten Wert erreicht hat, wird über den Konzentrationsmesser 7 ein Ventil geöffnet und der zweite Raum 6 entleert. In dem hier dargestellten Betrieb kann sowohl das Produkt der Verdampfung - Süßwasser - als auch das der Eindampfung - Lake - mitverwertet werden. Das Schwimmerventil 9 läßt das Destillat, aus dem dritten Raum 4 in den zweiten Raum 6 durch, sperrt jedoch den Durchgang, wenn kein Destillat vorhanden ist, z. B. beim Start.

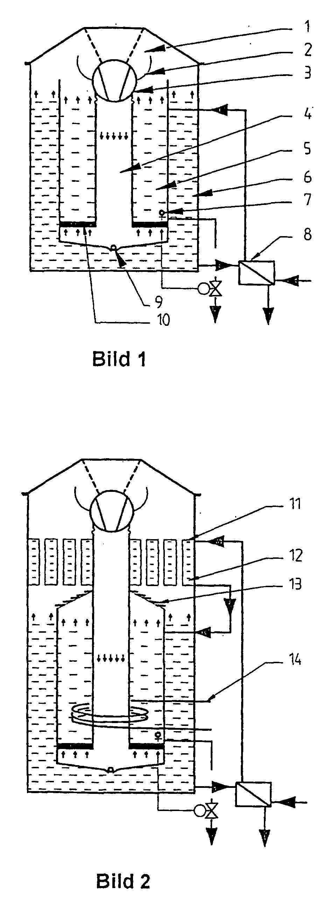

In Bild 2 ist eine nach den gleichen Grundsätzen konzipierte Abwandlung dargestellt. Sie vereint die beiden erwähnten Möglichkeiten der Dampfausscheidung durch Verdichten und Kühlen und ist zweistufig konzipiert. Sie enthält zusätzlich Wärmetauscher 11 und 14. Der Wärmetauscher 14 ermöglicht die Nutzung weiterer Energiespender, ohne daß dies für den Betrieb der Anlage zwingend notwendig wäre. In einem "Inselbetrieb" kann der Wärmetauscher 14 im Sinne der Wärme-Kraft-Kopplung eingesetzt werden. Ebenso ermöglicht sein Einsatz das Zuschalten von Sonnenkollektoren oder, bei Betrieb der Anlage mit Windkraft, die Nutzung überschüssiger Energie, um die Effektivität der Anlage zu steigern. Das im Wärmetauscher 8 vorgewärmte Salzwasser wird im Wärmetauscher 11 nachgewärmt und dem Prozeß wieder zugeführt. Im übrigen treffen die Erläuterungen der ersten Modifikation zu.
In beiden Beispielen sind die dargestellten Behältnisse und Vorrichtungen als rotationssymmetrisch zu verstehen, so daß zugunsten der Übersichtlichkeit auf weitere Schnitte und Details verzichtet werden konnte.

Die oben beschriebenen Verfahrensschritte seien im folgenden gegliedert in der Reihenfolge der damit erzielbaren Vorteile dargestellt:
- Durch das Einpressen von ungesättigter Luft - oder je nach Zweckmäßigkeit, einem anderen Medium, entsprechend der gegenseitigen Löslichkeit - in Bläschenform über den Boden 10 am Fuß der Flüssigkeitssäule im Raum 4, wird eine Simulation des Siedeprozesses erreicht, so daß nun nicht mehr allein die Oberfläche dieser Flüssigkeitssäule für die Verdampfung maßgebend ist, sondern ein Vielfaches davon.
   Diese aufsteigende Strömung impliziert noch eine Reihe von Vorteilen, wie die Zerstörung der Schichten der Partialdrücke an der Oberfläche der Flüssigkeitssäule, welche eine hemmende Wirkung für die Verdampfung ausüben. Es ist allgemein bekannt, daß turbulente Strömungen sich bei Austauschprozessen günstig auswirken.
- Durch Absaugen der gesättigten Luft, oder allgemeiner des Transportmediums, an der Oberfläche der Flüssigkeitssäule werden alle Vorteile der Unterdruckverdampfung genutzt.
- Durch Pressen der gesättigten Luft durch den als Wärmetauscher wirkenden Kompressions- und Kondensationsraum 4 werden die Vorteile der Dampfverdichtung genutzt.

Der erfindungsgemäße Apparat mit dem Expansionsraum 1, dem Kompressions- und Kondensationsraum 4 und, dem Kompressor bzw. Verdichter 3 sowie gegebenenfalls einem Drosselorgan und/oder einem Expansionsventil, stellt eine Wärmepumpe dar, die es ermöglicht, den Energiebedarf der Anlage zu minimieren und die Verlustleistung des Verdichters dem Prozeß zuzuführen. Im Falle der Entsalzung können z. B. wassergekühlte Wasserringpumpen als Verdichter eingesetzt werden, welche mit dem Destillat gekühlt werden.

Vor allem bei einer Anlage nach Bild 2 kann eine niedrige mittlere Betriebstemperatur erwartet werden, die schätzungsweise zwischen 40°C und 60°C liegt und es ermöglicht, das bisher, aufgrund seiner niedriger Enthalpie, brachliegende Potential der Umweltspender besser zu nutzen.

Als Beispiel sei hier erwähnt, daß in bestimmten Gegenden Spaniens keine Hotels gebaut werden dürfen, wenn sie nicht über eine eigene Entsalzungsanlagen verfügen. Mit Hilfe der Erfindung kann die Abwärme der Klimaanlage eines solchen Hotels sinnvoll mit einem dann zweifachen Energieeinsparungseffekt genutzt werden: Einerseits kann die Klimaanlage mit niedrigerem Energieeinsatz betrieben werden; andererseits wird die bisher sinnlos in die Umgebung abgeführte Energie der Abwärme nutzbringend eingesetzt. Es sei in diesem Zusammenhang bemerkt, daß die Effizienz einer Entsalzungsanlage in Abhängigkeit von der Abwärme der Klimaanlage steigt, d. h. zu Beginn der Saison, wenn erhöhter Wasserbedarf besteht.

Abhängig vom angestrebten Ergebnis können nicht nur die oben beschriebenen Beispiele, sondern auch andere nach dem Erfindungsprinzip konzipierte Anlagen in Reihe, z. B. kaskadierend, geschaltet werden, z. B. bei Flash Evaporation, indem man die einzelnen Elemente entweder in einer Anordnung wie beschrieben oder auch alternierend schaltet.

Ein weiterer Vorteil der niedrigen, mittleren Betriebstemperatur ist darin zu sehen, daß der Kompressions-/Kondensationsraum 4 nicht mehr aus teurem Edelstahl, z. B. aus CrMg-Stahl, sondern aus billigerem Metall, wie Kupfer bestehen kann, so daß nicht allein die Gestehungskosten, sondern auch die Betriebskosten wegen der besseren Wärmeleitzahl von Kupfer λ_{Cu} erheblich gesenkt werden können (λ_{St} verhält sich zu λ_{Cu} wie 1:181).

## Patentansprüche

1. Apparat zum Verdampfen von Flüssigkeiten mit einem geschlossenen Behälter, der enthält:
einen ersten, oben offenen Raum (5) zur Aufnahme einer zu verdampfenden Flüssigkeit (5) mit einem porösen Boden (10);
einen zweiten oben offenen Raum (6) zur Aufnahme von Destillat;
einen Kompressor (3), dessen Druckseite mit einem dritten Raum (4), dem Kompressionsund Kondensationsraum (4), und dessen Saugseite mit einem vierten Raum (1), dem Expansionsraum, verbunden ist;
wobei der dritte Raum (4) mit dem ersten Raum (5) über eine gemeinsame Wand in wärmetauschender Verbindung steht und eine Verbindung zur Unterseite des porösen Bodens (10) des ersten Raumes (5) aufweist, und wobei die Saugseite des Kompressors mit der offenen Oberseite des ersten und zweiten Raumes (5, 6) kommuniziert, so daß im vierten Raum (1) befindliches, von dem Kompressor (3) verdichtetes Gas vom dritten Raum (4) über den porösen Boden (10) des ersten Raumes durch die Flüssigkeit im ersten Raum hindurch aufsteigt und im vierten Raum (1) entspannt, und
eine versperrbare Ableitöffnung (9) im Boden des dritten Raums (4), durch welche im dritten Raum sich ansammelndes Destillat in den zweiten Raum ableitbar ist.

2. Verfahren zum Verdampfen von Flüssigkeiten, bei dem
- die zu verdampfende Flüssigkeit einem ersten, oben offenen Raum (5) mit einem porösem Boden (10) zugeführt wird;
- durch den porösen Boden (10) in die Flüssigkeit ein Gas eingeleitet und dadurch mit Dampf gesättigt wird;
- das oben aus der Flüssigkeit entweichende gesättigte Gas in einen dritten Raum (4) verdichtet wird, wobei der Dampf auskondensiert;
- das auskondensierte Destillat abgezogen wird;
- das Gas erneut durch den porösen Boden (10) in die Flüssigkeit eingeleitet wird;
- wobei der dritte Raum (4) über eine gemeinsame Wand mit dem ersten Raum in wärmeleitender Verbindung steht.

3. Apparat nach Anspruch 1, **dadurch gekennzeichnet, daß** der erste, zweite und dritte Raum (5, 6, 4) rotationssymmetrisch ineinander geschachtelt sind.

4. Apparat nach Anspruch 3, **dadurch gekennzeichnet, daß** der erste und zweite Raum (5, 6) ringförmig ausgebildet sind, und daß der dritte Raum (4) im wesentlichen zylindrisch ist und von dem ersten Raum, getrennt durch die gemeinsame Wand, umgeben ist.

5. Apparat nach einem der Ansprüche 1, 3 oder 4, **dadurch gekennzeichnet, daß** der erste Raum (5) mit dem zweiten Raum (6) über eine gemeinsame Wand in wärmetauschender Verbindung steht.

6. Apparat nach einem der Ansprüche 1 oder 3 bis 5, **dadurch gekennzeichnet, daß** der dritte Raum (4) von zusätzlichen Wärmetauschern (11, 14) umgeben ist.

## Claims

1. Apparatus for evaporation of liquids having a closed container, comprising a first chamber (5) having a porous bottom (10) and being open at its upper end, for holding a liquid (5) to be evaporated, a second chamber (6), being open at its upper end, for collecting distillate, a compressor (3), the compression side of which being connected to a third chamber (4), the compression and condensation chamber, and the suction side of which being connected to a fourth chamber (1), the expansion chamber, whereby the third chamber (4) communicates in a heat exchanging manner with the first chamber (5) via a joint wall and comprises a communication to the bottom side of the porous bottom (10) of the first chamber (5), the suction side of the compressor communicating with the open upper end of the first and second chamber (5,6) in such a way that a gas contained in the fourth chamber (1) and condensed by the compressor (3) rises from the third chamber(4) via the porous bottom (10) of the first chamber through the liquid in the first chamber and is expanded in the fourth chamber (1), thereby the distillate collecting at the bottom of the third chamber (4) is conducted via a drain aperture (9) which can be closed at the bottom of the third chamber into the second chamber.

2. Process for evaporation of liquids, wherein the liquid to be evaporated is conducted to a first chamber (5) being open at its upper end and having a porous bottom (10); through this porous bottom (10) a gas is introduced into the liquid and thereby saturated with vapour and the gas evaporating from the liquid at the upper end is compressed in a third chamber (4), whereby the vapour condenses and the condensed distillate is removed and the gas is again conducted through the porous bottom (10) into the liquid; wherein the third chamber (4) communicates in a heat exchanging manner with the first chamber via a joint wall.

3. Apparatus as claimed in claim 1, **characterised in that** the first, second and third chamber (5,6,4) are inserted into one another in a rotationally symmetric manner.

4. Apparatus as claimed in claim 3, **characterised in that** the first and second chamber (5,6) are formed in a ring shape, and that the third chamber (4) is essentially cylindrical and -separated by the joint wall- surrounded by the first chamber.

5. Apparatus as claimed in any of the claims 1,3 or 4, **characterised in that** the first chamber (5) is in a heat exchanging connection with the second chamber (6) by a shared wall.

6. Apparatus as claimed in any of the claims 1 or 3 or 5, **characterised in that** the third chamber (4) is provided with additional heat exchangers (11, 14).

## Revendications

1. Dispositif destiné à l'évaporation de liquides **caractérisé en ce que** ce récipient fermé est constitué de une première chambre ouverte en sa partie supérieure (5) au socle poreux (10) destiné à la réception des liquides à faire évaporer (5); une deuxième chambre ouverte en sa partie supérieure (6) destiné à la réception du distillat; un compresseur (3) dont le côté comprimant est en contact avec une troisième cavité (4), la chambre de compression et de condensation (4), et dont le côté aspirant est en contact avec une quatrième cavité (1), la chambre d'expansion (1), la troisième chambre (4) se trouvant en échange thermique avec la première chambre par une paroi commune et communiquant par le bas avec le sol poreux (10) de la première chambre; le côté aspirant du compresseur communique avec la partie supérieure ouverte des première et deuxième chambres (5,6), de telle manière qu'un gaz comprimé par le compresseur (3) dans la troisième chambre s'élève de la troisième chambre (4) via le sol poreux (10) de la première chambre, à travers le liquide de la première chambre et se dilate dans la quatrième chambre ; de la sorte, le distillat s'accumulant au fond de la troisième chambre, s'écoulera dans la deuxième chambre par un orifice de dérivation condamnable.

2. Méthode d'évaporation de liquides, par laquelle une première chambre ouverte en sa partie supérieure (5) au socle poreux (10) est alimentée en liquide à évaporer, par ce socle poreux, un gaz est introduit dans le liquide et ainsi saturé de vapeur, et le gaz saturé de vapeur se dégageant au dessus du liquide est comprimé dans une troisième chambre (4), à l'occasion de quoi la vapeur se condense et le distillat condensé est extrait tandis que le gaz est à nouveau introduit dans le liquide à travers le socle poreux (10) ; cependant qu'une paroi commune donne lieu à une conduction de chaleur entre les troisième et première chambres.

3. Dispositif selon la revendication 1, **caractérisé en ce que** les première, deuxième et troisième chambres ( 5,6,4) sont emboîtées les unes dans les autres de manière symétriquement rotatoire.

4. Dispositif selon la revendication 3, **caractérisé en ce que** les première et deuxième chambres (5,6) sont construites en forme d'anneau , et que la troisième chambre est dans sa majeure partie cylindrique et est séparée de la première chambre par la paroi qui l'entoure.

5. Dispositif selon une des revendications 1,3, ou 4, **caractérisée en ce que** la première chambre (5) est en situation d'échange thermique avec la deuxième chambre par la paroi commune.

6. Dispositif d'après les revendications 1 ou 3 à 5, **caractérisé en ce que** la troisième chambre (4) est garnie d' échangeurs de chaleur supplémentaires (11,14).
